# EUROPEAN PATENT APPLICATION

(11) **EP 2 233 541 A1**
(43) Date of publication of application: **29.09.2010**
(21) Application number: 10155293.3
(22) Date of filing: 03.03.2010
(51) Int. Cl.: C09D 11/10, C09D 11/00

(54) **Cationically and hybrid curable UV gels**

(30) Priority: 24.03.2009 US 409960
(71) Applicant: Xerox Corporation, Rochester, New York 14644 (US)
(72) Inventor: Belelie, Jennifer L., Oakville Ontario L6N 4A5 (CA); Chretien, Michelle, Mississauga Ontario L5N 1J2 (CA); Keoshkerian, Barkev, Thornhill Ontario L4J 7E8 (CA); Chopra, Naveen, Oakville Ontario L6H 5W4 (CA); Odell, Peter G., Mississauga Ontario L5J 1L3 (CA)
(74) Representative: De Anna, Pier Luigi

(57) **Abstract**

Disclosed are radiation curable phase change ink and overcoat compositions that contain a gellant, a cationically curable monomer, a cationic photoinitiator, and, optionally, a radically curable monomer and, further optionally, a free-radical photoinitiator. A phase change ink composition further contains a colorant. A phase change overcoat composition is free of colorant. The gellant may be an amide gellant. The cationically curable monomer may be selected from epoxides, vinyl ethers and oxetanes. The cationic photoinitiator may be selected from triarylsulphonium salts, diaryliodonium salts, aryldiazonium salts, triarylselenonium salts, dialkylphenacylsulphonium salts, triarylsulphoxonium salts, aryloxydiarylsulphonoxonium salts, and dialkylphenacylsulphoxonium salts, in which the salts are formed with ions selected from BF₄⁻, PF₆⁻, AsF₆⁻, SbF₆⁻, and CF₃SO₃⁻.

## Description

### BACKGROUND

The present disclosure generally relates to curable inks, particularly curable phase change inks, and their use in methods for forming images, particularly their use in ink jet printing.

U.S. Published Patent Application No. 2006/0158491 to Belelie et al. discloses non-gellant ink jet ink compositions that comprise wax backbones containing a functionalized group, and methods of forming an image with such inks. Some disclosed ink jet ink compositions are cationically curable.

U.S. Published Patent Application No. 2006/0158492 to Odell et al. discloses non-gellant ink jet ink compositions that can be cured via at least two different polymerization routes, including radical and cationic polymerization routes, and methods of forming an image with such inks by advantageously utilizing the different polymerization routes. Also described are non-gellant ink jet ink compositions that can be cured by a single polymerization route and that contain two photoinitiator systems that absorb radiation at different wavelengths.

U.S. Published Patent Application No. 2007/0120910 to Odell et al. discloses a phase change ink composition comprising a colorant, a photoinitiator, and an ink vehicle. The ink vehicle comprises a radically curable monomer compound and an amide gellant compound of the formula 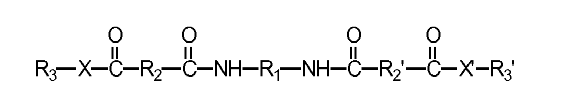 in which the reference further defines the specific substituents.

U.S. Published Patent Application No. 2007/0123606 to Toma et al. discloses a phase change ink comprising a colorant, an initiator, and a phase change ink carrier. The ink vehicle comprises a radically curable monomer compound and an amide gellant compound as further defined in the reference.

Ink jetting devices are known in the art, and thus extensive description of such devices is not required herein. As described in U.S. Patent No. 6,547,380, ink jet printing systems generally are of two types: continuous stream and drop-on-demand.

In continuous stream ink jet systems, ink is emitted in a continuous stream under pressure through at least one orifice or nozzle. The stream is perturbed, causing it to break up into droplets at a fixed distance from the orifice. At the break-up point, the droplets are charged in accordance with digital data signals and passed through an electrostatic field that adjusts the trajectory of each droplet in order to direct it to a gutter for recirculation or a specific location on a recording medium. In drop-on-demand systems, a droplet is expelled from an orifice directly to a position on a recording medium in accordance with digital data signals. A droplet is not formed or expelled unless it is to be placed on the recording medium.

There are at least three types of drop-on-demand ink jet systems. One type of drop-on-demand system is a piezoelectric device that has as its major components an ink filled channel or passageway having a nozzle on one end and a piezoelectric transducer near the other end to produce pressure pulses. Another type of drop-on-demand system is known as acoustic ink printing. As is known, an acoustic beam exerts a radiation pressure against objects upon which it impinges. Thus, when an acoustic beam impinges on a free surface (i.e., liquid/air interface) of a pool of liquid from beneath, the radiation pressure which it exerts against the surface of the pool may reach a sufficiently high level to release individual droplets of liquid from the pool, despite the restraining force of surface tension. Focusing the beam on or near the surface of the pool intensifies the radiation pressure it exerts for a given amount of input power. Still another type of drop-on-demand system is known as thermal ink jet, or bubble jet, and produces high velocity droplets. The major components of this type of drop-on-demand system are an ink filled channel having a nozzle on one end and a heat generating resistor near the nozzle. Printing signals representing digital information originate an electric current pulse in a resistive layer within each ink passageway near the orifice or nozzle, causing the ink vehicle (usually water) in the immediate vicinity to vaporize almost instantaneously and create a bubble. The ink at the orifice is forced out as a propelled droplet as the bubble expands.

In ink jetting, it is known to use phase change inks, also referred to as hot-melt inks. In general, phase change inks are in a solid or semi-solid phase at, for example, ambient temperature, but exist in the liquid phase at the elevated operating temperature of an ink jet printing device. At the jet operating temperature, droplets of liquid ink are ejected from the printing device and, when the ink droplets contact the surface of the recording substrate, either directly or via an intermediate heated transfer belt or drum, they quickly solidify to form a predetermined pattern of solidified ink drops. Phase change inks have been used in other printing technologies, such as gravure printing, as disclosed in, for example, U.S. Patent No. 5,496,879. Phase change inks have also been used for applications such as postal marking, industrial marking, and labeling.

Phase change inks are desirable for ink jet printers because they remain in a solid or semi-solid phase at room temperature during shipping, long term storage, and the like. In addition, the problems associated with nozzle clogging as a result of ink evaporation with liquid ink jet inks are largely eliminated, thereby improving the reliability of the ink jet printing. Further, in phase change ink jet printers wherein the ink droplets are applied directly onto the final recording substrate (for example, paper, transparency material, and the like), the droplets solidify immediately upon contact with the substrate, so that migration of ink along the printing medium is prevented and dot quality is improved.

While known compositions are suitable for their intended purposes, a need remains for improved phase change inks and overcoats, for example for radiation curable phase change inks and overcoats that provide opportunities for dark cure and/or shadow cure, and exhibit increased thermal stability, substantial to complete insensitivity to oxygen, and/or low shrinkage.

### SUMMARY

In embodiments, a radiation curable phase change ink or overcoat composition comprises a gellant, a cationically curable monomer, a cationic photoinitiator, and, optionally, a radically curable monomer and a free-radical photoinitiator.

In some embodiments, the cationically curable monomer is selected from the group consisting of epoxides, vinyl ethers and oxetanes, such as 3,4-epoxycyclohexylmethyl-3,4-epoxycycloxane carboxylate; hexanedioic acid, bis[4-(vinyloxy)butyl] ester; bis[4-(ethenyloxy)butyl] adipate; 1,3-benzenedicarboxylic acid, bis[4-(ethenyloxy)butyl] ester; 4-(vinyloxy)butyl stearate; 4-(vinyloxy)butyl benzoate; 4-(vinyloxymethyl)cyclohexylmethyl benzoate; vinyl octadecyl ether; vinyl iso-octyl ether; 1,2,4-benzenetricarboxylic acid, tris[4-(ethenyloxy)butyl]ester; 1,4-butanediol diglycidyl ether; and 1,2-epoxyhexadecane.

In some embodiments, a radiation curable phase change ink or overcoat composition comprises a gellant, a cationically curable monomer, a cationic photoinitiator, and, optionally, a radically curable monomer and a free-radical photoinitiator, where the cationic photoinitiator is selected from the group consisting of triarylsulphonium salts, diaryliodonium salts, aryldiazonium salts, triarylselenonium salts, dialkylphenacylsulphonium salts, triarylsulphoxonium salts, aryloxydiarylsulphonoxonium salts, and dialkylphenacylsulphoxonium salts, where the salts are formed with ions selected from BF₄⁻, PF₆⁻, AsF₆⁻, SbF₆⁻, and CF₃SO₃⁻.

In other embodiments, an image is formed over a substrate, where the image comprises a radiation curable phase change ink or overcoat composition digitally applied to the substrate, and the radiation curable phase change ink or overcoat composition comprises a gellant, a cationically curable monomer, a cationic photoinitiator, and, optionally, a radically curable monomer and a free-radical photoinitiator.

In further embodiments, a method for preparing a radiation curable phase change ink comprises mixing a gellant, a cationically curable monomer, a cationic photoinitiator, and, optionally, a radically curable monomer and a free-radical photoinitiator.

### EMBODIMENTS

Disclosed are colored and colorless compositions, such as ink and overcoat compositions, comprising, for example, a gellant, a cationically curable monomer, a cationic photoinitiator and, optionally, a radically curable monomer and, further optionally, a free-radical photoinitiator. Compositions that include both a cationically curable component and a radically curable component are referred to herein as "hybrid" compositions. In some embodiments, the hybrid compositions comprise a radically curable monomer and a free-radical photoinitiator for catalyzing free-radical curing upon exposure to radiation, in addition to a gellant, a cationically curable monomer and a cationic photoinitiator for catalyzing cationic curing upon exposure to radiation.

For an ink composition, the composition further comprises a colorant, such as a pigment, dye, mixture of pigments, mixture of dyes, or mixture of pigments and dyes, present in an amount from about 0.5% to about 15% by weight of the composition, such as from about 1% to about 10% or from about 3% to about 8% by weight of the composition. In some embodiments, the colorant may be present in an amount from about 0.5% to about 7% by weight of the composition, such as from about 0.5% to about 5% or from about 1% to about 4% by weight of the composition. In other embodiments, the colorant may be present in an amount from about 7% to about 15% by weight of the composition, such as from about 9% to about 15% or from about 11% to about 14% by weight of the composition. For an overcoat composition, the composition is substantially free of colorant. By "substantially free of colorant," it is meant that the composition comprises a colorant present in an amount less than about 0.5% by weight of the composition. The compositions are radiation curable compositions, such as UV curable compositions. The compositions may also optionally include a stabilizer, a surfactant, or other additives.

As a gellant, compounds of the formula 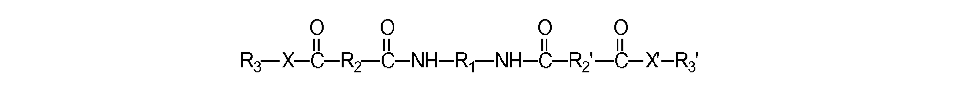 may be used wherein:
R₁ is:
   (i) an alkylene group (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), with from, for example, 1 to about 20 carbon atoms in the alkylene chain, such as from 1 to about 12 or from 1 to about 4 carbon atoms,
   (ii) an arylene group (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), with from, for example, about 5 to about 20 carbon atoms in the arylene chain, such as from about 6 to about 14 or from about 6 to about 10 carbon atoms,
   (iii) an arylalkylene group (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), with from, for example, about 6 to about 32 carbon atoms in the arylalkylene chain, such as from about 7 to about 22 or from about 7 to about 20 carbon atoms, or
   (iv) an alkylarylene group (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), with from, for example, about 6 to about 32 carbon atoms in the alkylarylene chain, such as from about 7 to about 22 or from about 7 to about 20 carbon atoms, wherein the substituents on the substituted alkylene, arylene, arylalkylene, and alkylarylene groups can be, for example, halogen atoms, cyano groups, pyridine groups, pyridinium groups, ether groups, aldehyde groups, ketone groups, ester groups, amide groups, carbonyl groups, thiocarbonyl groups, sulfide groups, nitro groups, nitroso groups, acyl groups, azo groups, urethane groups, urea groups, mixtures thereof, and the like, wherein two or more substituents can be joined together to form a ring;
R₂ and R₂' each, independently of the other, are:
   (i) alkylene groups (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), with from, for example, 1 to about 54 carbon atoms in the alkylene chain, such as from 1 to about 44 or from 1 to about 36 carbon atoms,
   (ii) arylene groups (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), with from, for example, 5 to about 14 carbon atoms in the arylene chain, such as from 6 to about 14 or from 7 to about 10 carbon atoms,
   (iii) arylalkylene groups (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), with from, for example, about 6 to about 32 carbon atoms in the arylalkylene chain, such as from about 7 to about 22 or from 8 to about 20 carbon atoms, or
   (iv) alkylarylene groups (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), with from, for example, about 6 to about 32 carbon atoms in the alkylarylene chain, such as from about 7 to about 22 or from about 7 to about 20 carbon atoms, wherein the substituents on the substituted alkylene, arylene, arylalkylene, and alkylarylene groups can be, for example, halogen atoms, cyano groups, ether groups, aldehyde groups, ketone groups, ester groups, amide groups, carbonyl groups, thiocarbonyl groups, phosphine groups, phosphonium groups, phosphate groups, nitrile groups, mercapto groups, nitro groups, nitroso groups, acyl groups, acid anhydride groups, azide groups, azo groups, cyanato groups, urethane groups, urea groups, mixtures thereof, and the like, wherein two or more substituents can be joined together to form a ring; R₃ and R₃' each, independently of the other, are either:
      (a) photoinitiating groups, such as groups derived from 1-(4-(2-hydroxyethoxy)phenyl)-2-hydroxy-2-methylpropan-1-one, of the formula 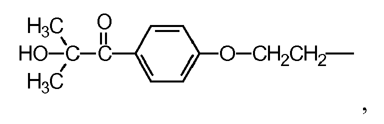 groups derived from 1-hydroxycyclohexylphenylketone, of the formula 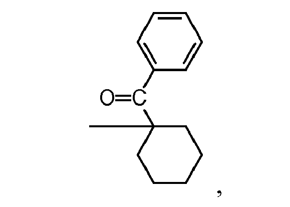 groups derived from 2-hydroxy-2-methyl-1-phenylpropan-1-one, of the formula 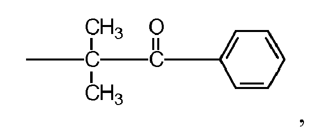 groups derived from *N,N*-dimethylethanolamine or *N,N*-dimethylethylenediamine, of the formula 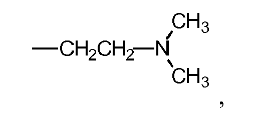 or the like, or:
      (b) a group which is:
         (i) an alkyl group (including linear and branched, saturated and unsaturated, cyclic and acyclic, and substituted and unsubstituted alkyl groups, and wherein heteroatoms, such as oxygen, nitrogen, sulfur, silicon, phosphorus, boron, and the like either may or may not be present in the alkyl group), with from, for example, about 2 to 100 carbon atoms in the alkyl chain, such as from about 3 to about 60 or from about 4 to about 30 carbon atoms,
         (ii) an aryl group (including substituted and unsubstituted aryl groups, and wherein heteroatoms, such as oxygen, nitrogen, sulfur, silicon, phosphorus, boron, and the like either may or may not be present in the aryl group), with from, for example, about 5 to about 100 carbon atoms on the aryl chain, such as from about 5 to about 60 or from about 6 to about 30 carbon atoms, such as phenyl or the like,
         (iii) an arylalkyl group (including substituted and unsubstituted arylalkyl groups, wherein the alkyl portion of the arylalkyl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkyl group), with from, for example, about 6 to about 100 carbon atoms on the arylalkyl chain, such as from 6 to about 60 or from about 7 to about 30 carbon atoms, such as benzyl or the like, or
         (iv) an alkylaryl group (including substituted and unsubstituted alkylaryl groups, wherein the alkyl portion of the alkylaryl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylaryl group), with from, for example, about 6 to about 100 carbon atoms in the alkylaryl chain, such as from about 6 to about 60 or from about 7 to about 30 carbon atoms, such as tolyl or the like, wherein the substituents on the substituted alkyl, arylalkyl, and alkylaryl groups can be, for example, halogen atoms, ether groups, aldehyde groups, ketone groups, ester groups, amide groups, carbonyl groups, thiocarbonyl groups, sulfide groups, phosphine groups, phosphonium groups, phosphate groups, nitrile groups, mercapto groups, nitro groups, nitroso groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring; and X and X' each, independently of the other, is an oxygen atom or a group of the formula -NR₄-, wherein R₄ is:
            (i) a hydrogen atom;
            (ii) an alkyl group, including linear and branched, saturated and unsaturated, cyclic and acyclic, and substituted and unsubstituted alkyl groups, and wherein heteroatoms either may or may not be present in the alkyl group, with from, for example, 1 to about 100 carbon atom in the alkyl chain, such as from 1 to about 60 or from 1 to about 30 carbon atoms,
            (iii) an aryl group, including substituted and unsubstituted aryl groups, and wherein heteroatoms either may or may not be present in the aryl group, with from, for example, about 5 to about 100 carbon atoms in the aryl chain, such as from about 5 to about 60 or about 6 to about 30 carbon atoms,
            (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, with from, for example, about 6 to about 100 carbon atoms in the arylalkyl group, such as from about 6 to about 60 or from about 7 to about 30 carbon atoms, or
            (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, with from, for example, about 6 to about 100 carbon atoms in the alkylaryl chain, such as from about 6 to about 60 or from about 7 to about 30 carbon atoms, wherein the substituents on the substituted alkyl, aryl, arylalkyl, and alkylaryl groups can be, for example, halogen atoms, ether groups, aldehyde groups, ketone groups, ester groups, amide groups, carbonyl groups, thiocarbonyl groups, sulfate groups, sulfonate groups, sulfonic acid groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring.

Specific suitable substituents and gellants of the above are further set forth in U.S. Patent Nos. 7,279,587 and 7,276,614 and U.S. Published Patent Applications Nos. 2007/0120910 and 2007/0123606. Some specific suitable substituents and gellants are discussed below.

In one specific embodiment, R₂ and R₂' are the same as each other; in another specific embodiment, R₂ and R₂' are different from each other. In one specific embodiment, R₃ and R₃' are the same as each other; in another specific embodiment, R₃ and R₃' are different from each other.

In one specific embodiment, R₂ and R₂' are each groups of the formula -C₃₄H₅₆₊ₐ- and are branched alkylene groups which may include unsaturations and cyclic groups, wherein a is an integer of 0, 1, 2, 3, 4, 5, 6, 7, 8, 9, 10, 11, or 12, including, for example, isomers of the formula

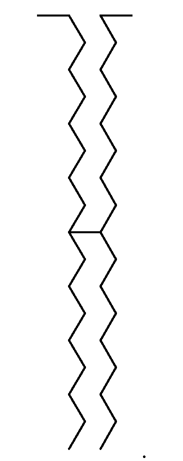

In one specific embodiment, R₁ is an ethylene (-CH₂CH₂-) group.

In one specific embodiment, at least one of R₃ and R₃' is of the formula

H₂C=CH-O-(CH₂)₄-

In another specific embodiment, at least one of R₃ and R₃' is of the formula

H₂C=CH-O-(CH₂)₂-O-(CH₂)₂-

In yet another specific embodiment, at least one of R₃ and R₃' is of the formula

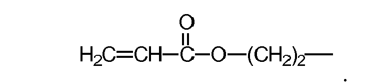

In still another specific embodiment, at least one of R₃ and R₃' is of the formula

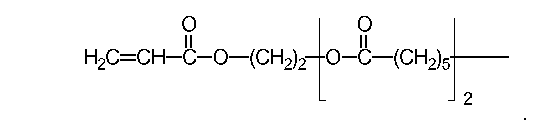

In another specific embodiment, at least one of R₃ and R₃' is of the formula 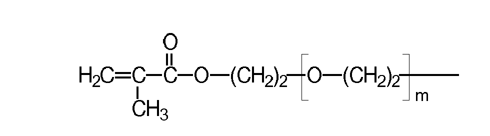 wherein m is an integer representing the number of repeating [O-(CH₂)₂] units, and is in one specific embodiment 2 and is in another specific embodiment 5.

In yet another specific embodiment, at least one of R₃ and R₃' is of the formula

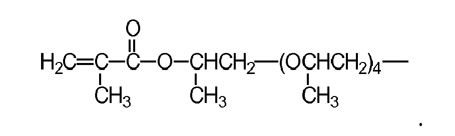

In one specific embodiment, at least one of R₃ and R₃' is

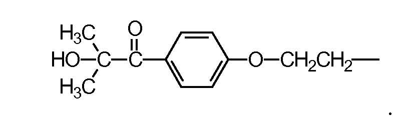

In embodiments, the gellant is of the formula 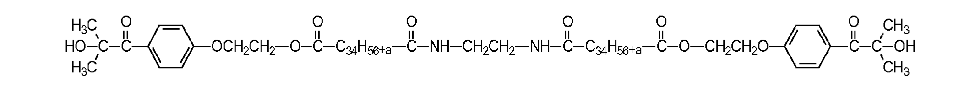 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12, including, for example, isomers of the formula

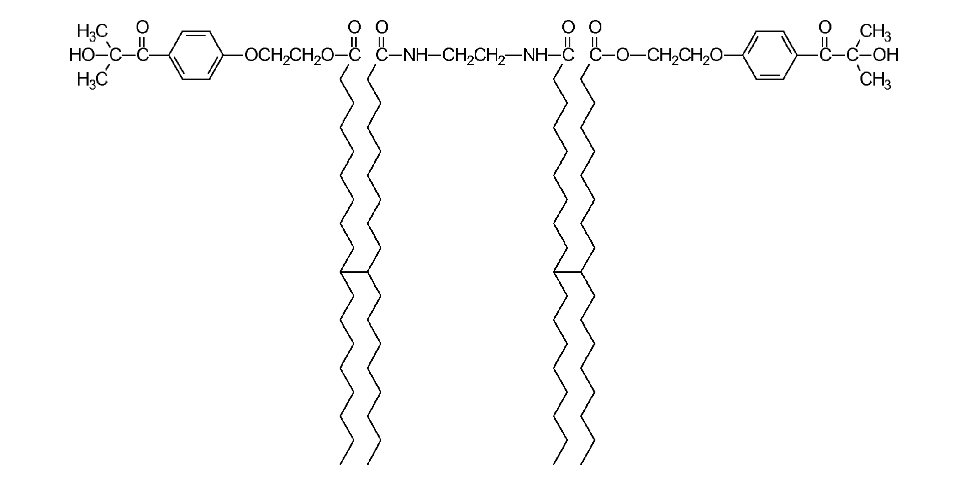

Additional specific examples of gellants of this formula include those of the formula 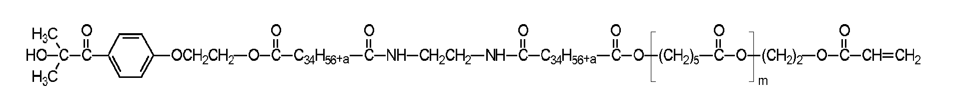 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein m is an integer, for example including embodiments wherein m is 2, including isomers of the formula 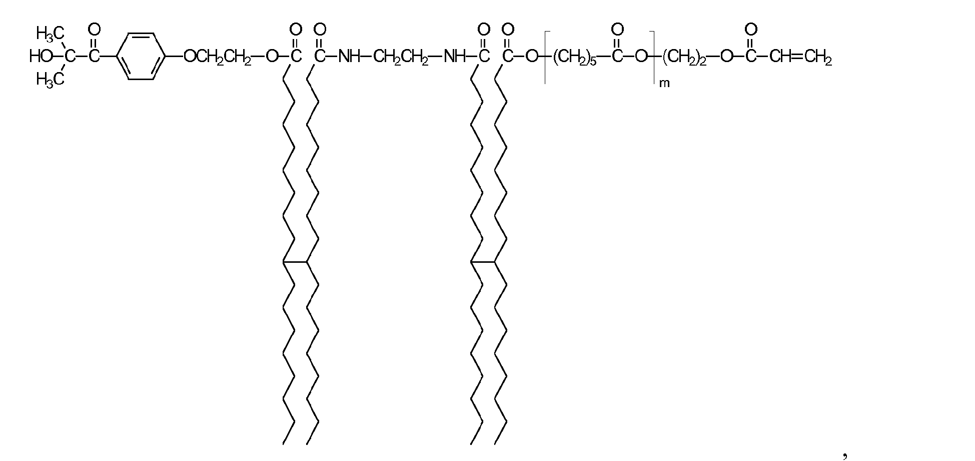 those of the formula 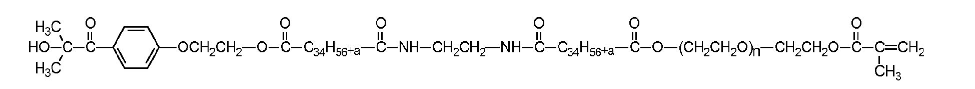 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein n is an integer, for example including embodiments wherein n is 2 and wherein n is 5, including for example, isomers of the formula 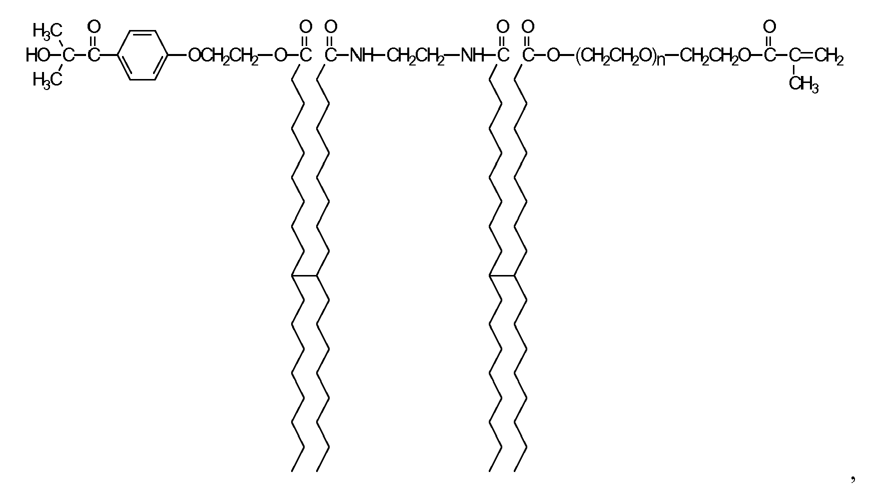 those of the formula 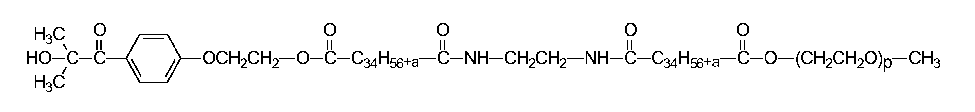 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein p is an integer, for example including embodiments wherein p is 2 and wherein p is 3, for example including isomers of the formula 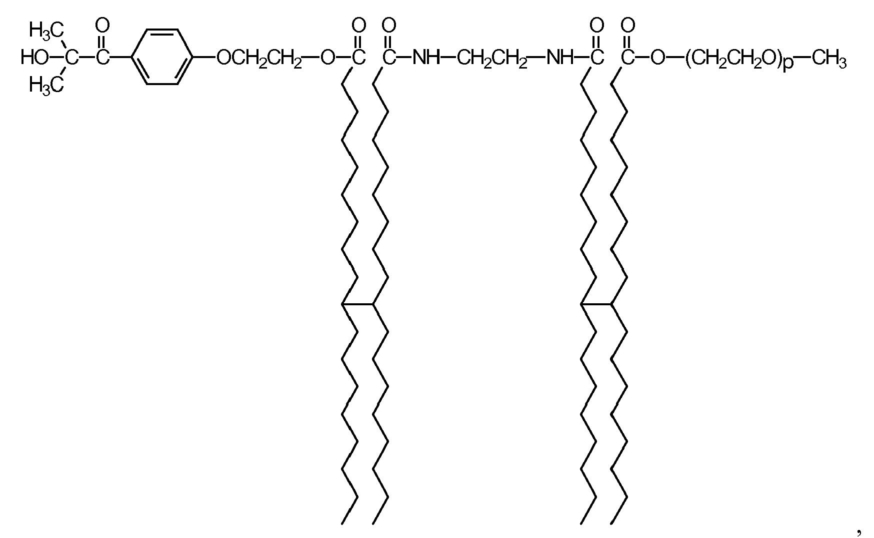 those of the formula 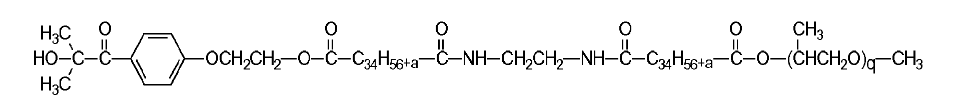 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein q is an integer, for example including embodiments wherein q is 2 and wherein q is 3, including for example, isomers of the formula 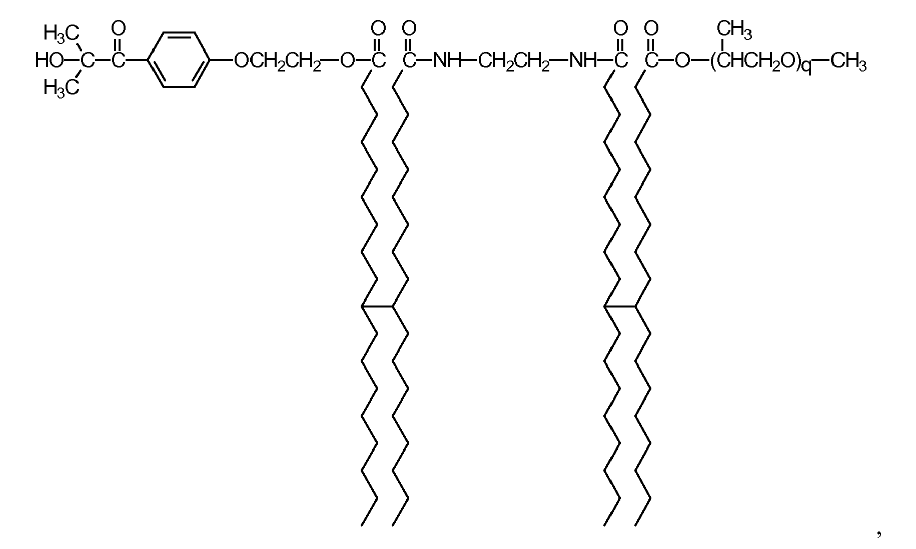 those of the formula 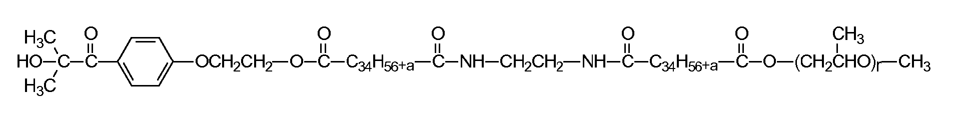 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein r is an integer, for example including embodiments wherein r is 2 and wherein r is 3, including isomers of the formula 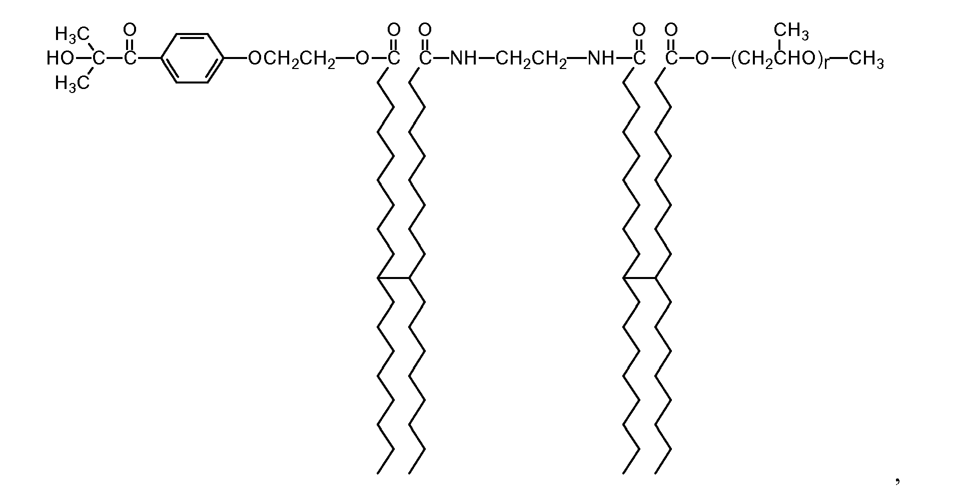 and the like, as well as mixtures thereof.

In embodiments, the gellant is a mixture, including a mixture of all three, of 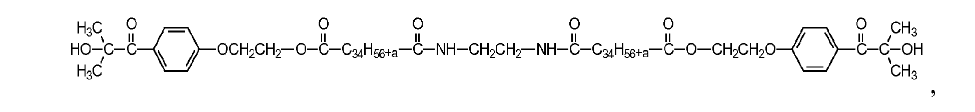 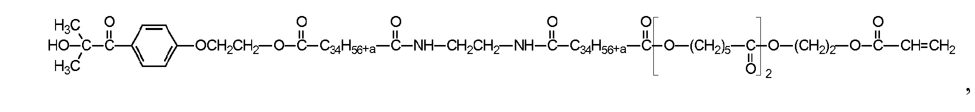 and 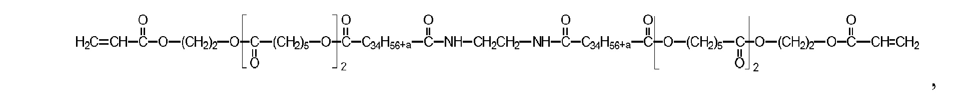 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12. Desirably, when all three compounds are used together as the gellant, the compounds are present in molar ratios of about 1:2:1 with respect to the first listed above : second listed above : third listed above.

Additional specific examples of suitable gellant compounds of the general formula above include those of the formula 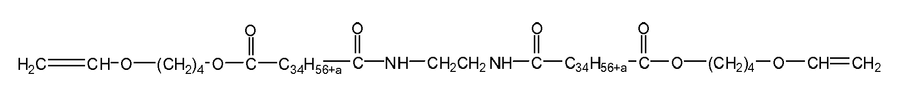 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12, including isomers of the formula 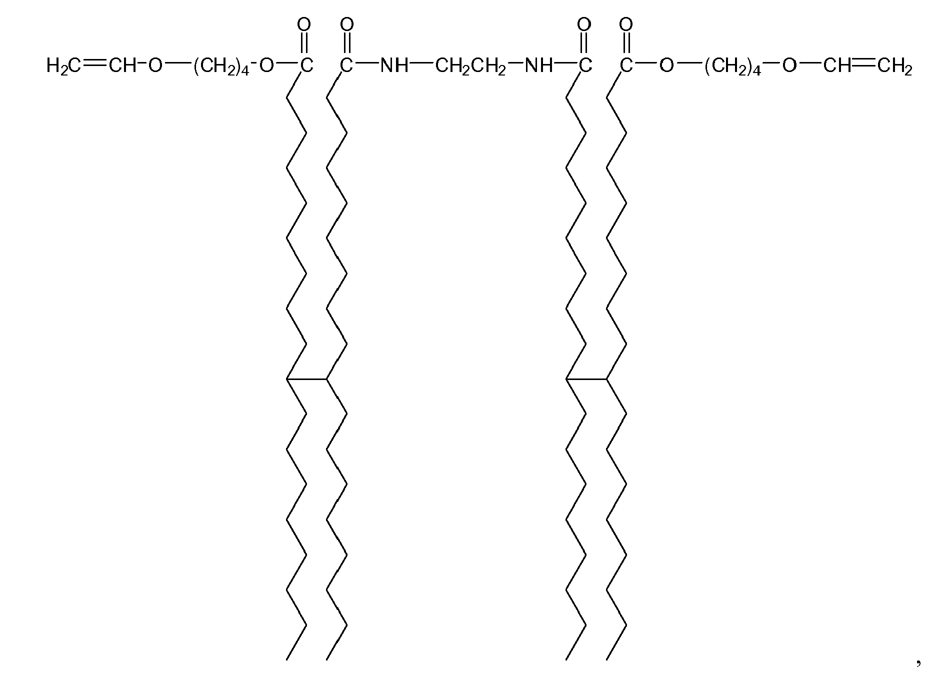 those of the formula 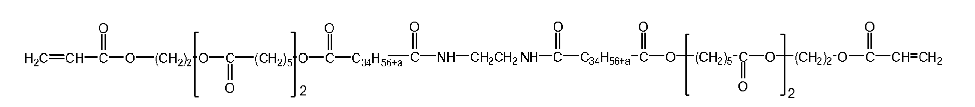 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12, including isomers of the formula 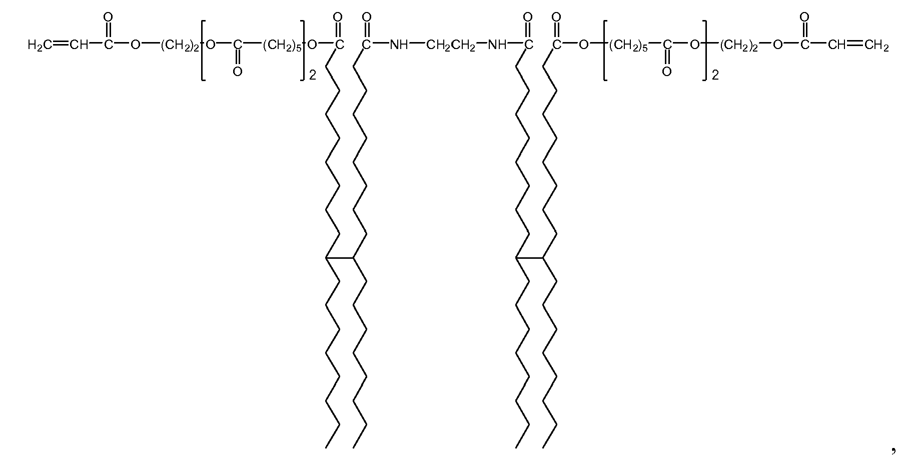 as well as mixtures thereof.

Many embodiments of the gellant compounds described above can exhibit gel-like behavior in that they undergo a relatively sharp increase in viscosity over a relatively narrow temperature range when dissolved in a liquid carrier such as those compounds that behave as curable monomers when exposed to radiation such as ultraviolet light. In embodiments, some compounds as disclosed herein undergo a change in viscosity of, for example, at least about 10³ centipoise, in further embodiments at least about 10⁵ centipoise, and in yet further embodiments at least about 10⁶ centipoise over a temperature range of, for example, in one embodiment at least about 30°C, in another embodiment at least about 10°C, and in yet another embodiment at least about 5°C, and compounds that do not undergo changes within these ranges are also included herein.

The curable ink and overcoat compositions (or other colored or colorless compositions) disclosed herein may form a semi-solid gel at a first temperature. For example, when the gellant is incorporated into a phase change ink, this temperature is below the specific temperature at which the ink is jetted. The semi-solid gel phase is a physical gel that exists as a dynamic equilibrium comprising one or more solid gellant molecules and a liquid solvent. The semi-solid gel phase is a dynamic networked assembly of molecular components held together by non-covalent interactions such as hydrogen bonding, Van der Waals interactions, aromatic non-bonding interactions, ionic or coordination bonding, London dispersion forces, or the like, which, upon stimulation by physical forces, such as temperature, mechanical agitation, or the like, or chemical forces, such as pH, ionic strength, or the like, can undergo reversible transitions from liquid to semi-solid state at the macroscopic level. The solutions containing the gellant molecules exhibit a thermally reversible transition between the semi-solid gel state and the liquid state when the temperature is varied above or below the gel point of the solution. This reversible cycle of transitioning between semi-solid gel phase and liquid phase can be repeated many times in the solution formulation.

In embodiments, the gellant may be a composite gellant, for example comprised of a curable epoxy resin and a polyamide resin. Suitable composite gellants are described in commonly assigned U.S. Patent Application Publication No. 2007/0120921.

The epoxy resin component in the composite gellant can be any suitable epoxy group-containing material. In embodiments, the epoxy group containing component includes the diglycidyl ethers of either polyphenol-based epoxy resin or a polyol-based epoxy resin, or mixtures thereof. That is, in embodiments, the epoxy resin has two epoxy functional groups that are located at the terminal ends of the molecule. The polyphenol-based epoxy resin in embodiments is a bisphenol A-co-epichlorohydrin resin with not more than two glycidyl ether terminal groups. The polyol-based epoxy resin can be a dipropylene glycol-co-epichlorohydrin resin with not more than two glycidyl ether terminal groups. Suitable epoxy resins have a weight average molecular weight in the range of about 200 to about 800, such as about 300 to about 700. Commercially available sources of the epoxy resins are, for example, the bisphenol-A based epoxy resins from Dow Chemical Corp. such as DER 383, or the dipropyleneglycol-based resins from Dow Chemical Corp. such as DER 736. Other sources of epoxy-based materials originating from natural sources may be used, such as epoxidized triglyceride fatty esters of vegetable or animal origins, for example epoxidized linseed oil, rapeseed oil and the like, or mixtures thereof. Epoxy compounds derived from vegetable oils such as the VIKOFLEX line of products from Arkema Inc., Philadelphia PA may also be used. The epoxy resin component is thus functionalized with acrylate or (meth)acrylate, vinyl ether, allyl ether and the like, by chemical reaction with unsaturated carboxylic acids or other unsaturated reagents. For example, the terminal epoxide groups of the resin become ring-opened in this chemical reaction, and are converted to (meth)acrylate esters by esterification reaction with (meth)acrylic acid.

As the polyamide component of the epoxy-polyamide composite gellant, any suitable polyamide material may be used. In embodiments, the polyamide is comprised of a polyamide resin derived from a polymerized fatty acid such as those obtained from natural sources (for example, palm oil, rapeseed oil, castor oil, and the like, including mixtures thereof) or the commonly known hydrocarbon "dimer acid," prepared from dimerized C-18 unsaturated acid feedstocks such as oleic acid, linoleic acid and the like, and a polyamine, such as a diamine (for example, alkylenediamines such as ethylenediamine, DYTEK® series diamines, poly(alkyleneoxy)diamines, and the like, or also copolymers of polyamides such as polyester-polyamides and polyether-polyamides. One or more polyamide resins may be used in the formation of the gellant. Commercially available sources of the polyamide resin include, for example, the VERSAMID series of polyamides available from Cognis Corporation (formerly Henkel Corp.), in particular VERSAMID 335, VERSAMID 338, VERSAMID 795 and VERSAMID 963, all of which have low molecular weights and low amine numbers. The SYLVAGEL^{®} polyamide resins from Arizona Chemical Company, and variants thereof including polyether-polyamide resins may be employed. The composition of the SYLVAGEL^{®} resins obtained from Arizona Chemical Company are described as polyalkyleneoxydiamine polyamides with the general formula, 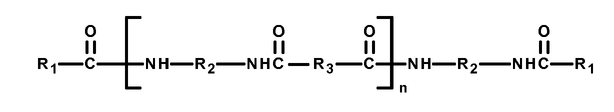 wherein R₁ is an alkyl group having at least seventeen carbons, R₂ includes a polyalkyleneoxide, R₃ includes a C-6 carbocyclic group, and n is an integer of at least 1.

The gellant may also comprise a curable polyamide-epoxy acrylate component and a polyamide component, such as disclosed, for example, in commonly assigned U.S. Patent Application Publication No. 2007/0120924. The curable polyamide-epoxy acrylate is curable by virtue of including at least one functional group therein. As an example, the polyamide-epoxy acrylate is difunctional. The functional group(s), such as the acrylate group(s), are radiation curable via free-radical initiation and enable chemical bonding of the gellant to the cured ink vehicle. A commercially available polyamide-epoxy acrylate is PHOTOMER® RM370 from Cognis. The curable polyamide-epoxy acrylate may also be selected from within the structures described above for the curable composite gellant comprised of a curable epoxy resin and a polyamide resin.

The colored or colorless composition may include the gellant in any suitable amount, such as from about 1% to about 50% by weight of the composition. In some embodiments, the gellant may be present in an amount from about 10% to about 40% by weight of the composition, such as from about 15% to about 35% or from about 20% to about 30% by weight of the composition. In some embodiments, the gellant may be present in an amount of from about 2% to about 20% by weight of the composition, such as from about 3% to about 10% or from about 5% to about 10% by weight of the composition, as well as from about 11% to about 19% or from about 15% to about 19% by weight of the composition. In other embodiments, the gellant may be present in an amount from about 20% to about 50% by weight of the composition, such from about 25% to about 45% or from about 35% to about 45% by weight of the composition. The values can also be outside of the above ranges.

In embodiments, colored and colorless compositions, such as ink and overcoat compositions, respectively, comprise at least one cationically curable monomer, that is, a monomer including at least one cationic polymerizable moiety in which the cationic moieties are, for example, epoxide, vinyl ether or oxetane groups. The term "curable monomer" is also intended to encompass curable oligomers, which may also be used in the compositions. Cationically curable monomers include cationically curable wax monomers.

In embodiments, the cationically curable monomer may be selected to provide an optimum rheology through curing in the presence of the remainder of the composition. In this regard, the cationically curable monomers may be, for example, epoxides, vinyl ethers or oxetanes. In some embodiments, the cationically curable monomer is selected from epoxides and vinyl ethers. The cationically curable monomers may be chosen to be mono-, di- and/or multi-functional in order to obtain the desired rheology and image properties.

Among suitable monomers, the following may be specifically identified: 3,4-epoxycyclohexylmethyl-3,4-epoxycycloxane carboxylate; hexanedioic acid, bis[4-(vinyloxy)butyl] ester; bis[4-(ethenyloxy)butyl] adipate; 1,3-benzenedicarboxylic acid, bis[4-(ethenyloxy)butyl] ester; 4-(vinyloxy)butyl stearate; 4-(vinyloxy)butyl benzoate; 4-(vinyloxymethyl)cyclohexylmethyl benzoate; vinyl octadecyl ether; vinyl iso-octyl ether; 1,2,4-benzenetricarboxylic acid, tris[4-(ethenyloxy)butyl]ester; 1,4-butanediol diglycidyl ether; and 1,2-epoxyhexadecane.

In embodiments, the cationically curable monomer may be from about 65% to about 96% by weight of the composition. In other embodiments, the cationically curable monomer may be from about 20% to about 48% by weight of the composition in which the composition additionally comprises at least one radically curable monomer in an amount from about 20% to about 48% by weight of the composition. In some embodiments in which the composition comprises both cationically and radically curable monomers, the cationically curable monomer may be from about 20% to about 34% by weight of the composition, such as from about 20% to about 27% or from about 28% to about 34% by weight of the composition. In other embodiments, the cationically curable monomer may be from about 24% to about 31 % by weight of the composition. In some embodiments in which the composition comprises both cationically and radically curable monomers, the cationically curable monomer may be from about 35% to about 48% by weight of the composition, such as from about 35% to about 41% or from about 42% to about 48% by weight of the composition. In other embodiments, the cationically curable monomer may be from about 38% to about 45% by weight of the composition. In some embodiments in which the composition comprises both cationically and radically curable monomers, the radically curable monomer may be from about 20% to about 34% by weight of the composition, such as from about 20% to about 27% or from about 28% to about 34% by weight of the composition. In other embodiments, the radically curable monomer may be from about 24% to about 31 % by weight of the composition. In some embodiments in which the composition comprises both cationically and radically curable monomers, the radically curable monomer may be from about 35% to about 48% by weight of the composition, such as from about 35% to about 41% or from about 42% to about 48% by weight of the composition. In other embodiments, the radically curable monomer may be from about 38% to about 45% by weight of the composition.

The colored and colorless compositions, such as ink and overcoat compositions, respectively, comprise at least one cationic photoinitiator that absorbs radiation at a wavelength and catalyzes a reaction as a result. In this regard, any suitable cationic photoinitiator may be used without limitation. There are many photoinitiators that can be used for cationic polymerization. The most commonly used cationic photoinitiators are triarylsulphonium and diaryliodonium salts, many of which are commercially available. Other similar type photoinitiators include aryldiazonium salts, triarylselenonium salts, dialkylphenacylsulphonium salts, triarylsulphoxonium salts, aryloxydiarylsulphonoxonium salts, and dialkylphenacylsulphoxonium salts. The salts are formed with ions such as BF₄⁻, PF₆⁻, AsF₆⁻, SbF₆⁻, CF₃SO₃⁻, etc. Substitution is often introduced to the aryl groups in order to increase the solubility of the initiators in nonpolar media. Other specific examples of photoinitiators that may be mentioned include bis[4-(diphenylsulphonio)-phenyl] sulphide bis-hexafluorophosphate, bis[4-di(4-(2-hydroxyethyl)phenyl)sulphonio-phenyl] sulphide bis-hexafluorophosphate, bis[4-di(4-(2-hydroxyethyl)phenyl)sulphonio-phenyl] sulphide bishexafluoroantimonate, 4-methylphenyl-(4-(2-methylpropyl) phenyl)iodonium hexafluorophosphate, (4-bromophenyl)diphenylsulfonium triflate, (4-phenylthiophenyl)diphenylsulfonium triflate , and R-gen® BF-1172 (obtained from Chitec Chemical Co., Ltd., Taiwan).

The cationic photoinitiator may be used in amounts of about 20% or less by weight of the composition. In some embodiments, the cationic photoinitiator is from about 0.5% to about 10% by weight of the composition. The cationic photoinitiator should be stable up to at least the jetting temperature of the composition so as not to lose effectiveness following jetting and/or not to be prematurely reactive at the elevated jetting temperature.

The radiation to cationically cure the compositions may be provided by any of a variety of techniques, including but not limited to techniques making use of a xenon lamp, laser light, microwave energized V bulb, filtered light transported via light pipes from a D or H bulb, etc. The curing light may be filtered, if desired or necessary.

The curing of the ink following transfer to the image receiving substrate may be substantially complete to complete, i.e., at least 75% of the cationically curable monomer is cured (reacted and/or crosslinked). This allows the composition to be substantially hardened, and thereby be much more scratch resistant than conventional unmodified wax based inks.

In embodiments, colored and colorless compositions, such as ink and overcoat compositions, respectively, optionally comprise at least one radically curable monomer. Examples of the radically curable monomer of the composition include propoxylated neopentyl glycol diacrylate (such as SR-9003 from Sartomer), diethylene glycol diacrylate, triethylene glycol diacrylate, hexanediol diacrylate, dipropyleneglycol diacrylate, tripropylene glycol diacrylate, alkoxylated neopentyl glycol diacrylate, isodecyl acrylate, tridecyl acrylate, isobornyl acrylate, propoxylated trimethylolpropane triacrylate, ethoxylated trimethylolpropane triacrylate, di-trimethylolpropane tetraacrylate, dipentaerythritol pentaacrylate, ethoxylated pentaerythritol tetraacrylate, propoxylated glycerol triacrylate, isobornyl methacrylate, lauryl acrylate, lauryl methacrylate, neopentyl glycol propoxylate methylether monoacrylate, isodecylmethacrylate, caprolactone acrylate, 2-phenoxyethyl acrylate, isooctylacrylate, isooctylmethacrylate, butyl acrylate, mixtures thereof and the like.

Here, the term "curable monomer" is also intended to encompass curable oligomers, which may also be used in the composition. Examples of suitable radically curable oligomers that may be used in the compositions have a low viscosity, for example, from about 50 cPs to about 10,000 cPs, such as from about 75 cPs to about 7,500 cPs or from about 100 cPs to about 5,000 cPs. Examples of such oligomers may include CN549, CN131, CN131B, CN2285, CN 3100, CN3105, CN132, CN133, CN 132, available from Sartomer Company, Inc., Exeter, PA, Ebecryl 140, Ebecryl 1140, Ebecryl 40, Ebecryl 3200, Ebecryl 3201, Ebecryl 3212, available from Cytec Industries Inc, Smyrna GA, PHOTOMER 3660, PHOTOMER 5006F, PHOTOMER 5429, PHOTOMER 5429F, available from Cognis Corporation, Cincinnati, OH, LAROMER PO 33F, LAROMER PO 43F, LAROMER PO 94F, LAROMER UO 35D, LAROMER PA 9039V, LAROMER PO 9026V, LAROMER 8996, LAROMER 8765, LAROMER 8986, available from BASF Corporation, Florham Park, NJ, and the like.

In embodiments, the radically curable monomer may include both a propoxylated neopentyl glycol diacrylate (such as SR-9003 from Sartomer) and a dipentaerythritol pentaacrylate (such as SR399LV from Sartomer). The inclusion of the pentaacrylate is advantageous in providing more functionality, and thus more reactivity, compared to the diacrylate. However, the amount of the pentaacrylate needs to be limited in the composition as too much can adversely affect the viscosity of the composition at application temperatures. The pentaacrylate thus makes up 10% by weight or less of the composition, such as 0.5 to 5% by weight of the composition.

The radically curable monomer may be included in the composition in an amount of, for example, from about 20% to about 48% by weight of the composition. In some embodiments, the radically curable monomer may be from about 20% to about 34% by weight of the composition, such as from about 20% to about 27% or from about 28% to about 34% by weight of the composition. In other embodiments, the radically curable monomer may be from about 24% to about 31 % by weight of the composition. In some embodiments, the radically curable monomer may be from about 35% to about 48% by weight of the composition, such as from about 35% to about 41% or from about 42% to about 48% by weight of the composition. In other embodiments, the radically curable monomer may be from about 38% to about 45% by weight of the composition.

The colored and colorless compositions, such as ink and overcoat compositions, respectively, further optionally comprise at least one free-radical photoinitiator that absorbs radiation at a wavelength and catalyzes a reaction as a result. Examples of free-radical photoinitiators suitable for use with such compositions include acrylate and/or amide groups, include benzophenones, benzoin ethers, benzil ketals, α-hydroxyalkylphenones, and acylphosphine photoinitiators, such as sold under the trade designations of IRGACURE and DAROCUR from Ciba. Specific examples of suitable free-radical photoinitiators include 2,4,6-trimethylbenzoyldiphenylphosphine oxide (available as BASF LUCIRIN TPO); 2,4,6-trimethylbenzoylethoxyphenylphosphine oxide (available as BASF LUCIRIN TPO-L); bis(2,4,6-trimethylbenzoyl)-phenyl-phosphine oxide (available as Ciba IRGACURE 819) and other acyl phosphines; 2-methyl-1-(4-methylthio)phenyl-2-(4-morphorlinyl)-1-propanone (available as Ciba IRGACURE 907) and 1-(4-(2-hydroxyethoxy)phenyl)-2-hydroxy-2-methylpropan-1-one (available as Ciba IRGACURE 2959); 2-hydroxy-1-(4-(4-(2-hydroxy-2-methylpropionyl)-benzyl)-phenyl)-2-methylpropan-1-one (available as Ciba IRGACURE 127); titanocenes; isopropylthioxanthone (ITX); 1-hydroxy-cyclohexylphenylketone; benzophenone; 2,4,6-trimethylbenzophenone; 4-methylbenzophenone; diphenyl-(2,4,6-trimethylbenzoyl) phosphine oxide; 2,4,6-trimethylbenzoylphenylphosphinic acid ethyl ester; oligo(2-hydroxy-2-methyl-1-(4-(1-methylvinyl)phenyl) propanone); 2-hydroxy-2-methyl-1-phenyl-1-propanone; benzyl-dimethylketal; and mixtures thereof.

Amine synergists, that is, co-initiators, that donate a hydrogen atom to a free-radical photoinitiator and thereby form a radical species that initiates polymerization (amine synergists can also consume oxygen dissolved in the formulation - as oxygen inhibits free-radical polymerization its consumption increases the speed of polymerization), for example such as ethyl-4-dimethylaminobenzoate and 2-ethylhexyl-4-dimethylaminobenzoate, may also be included.

In embodiments, the photoinitiator package may include at least one alpha-hydroxy ketone photoinitiator and at least one phosphinoyl type photoinitiator(s). One example of the alpha-hydroxy ketone photoinitiator is IRGACURE 127, while one example of the phosphinoyl type photoinitiator is IRGACURE 819, both available from Ciba-Geigy Corp., Tarrytown, NY. The ratio of the alpha-hydroxy ketone photoinitiator to the phosphinoyl type photoinitiator may be, for example, from about 90:10 to about 10:90, such as from about 80:20 to about 20:80 or from about 70:30 to about 30:70.

The total amount of the free-radical photoinitiator included in the composition may be, for example, from about 0 to about 10%, such as from about 0.5 to about 5%, by weight of the composition. In embodiments, the composition may be free of free-radical photoinitiators, for example, where e-beam radiation is used as the curing energy source for a free-radical curing.

The radiation to free-radical cure the compositions may be provided by any of a variety of techniques, including but not limited to techniques making use of a xenon lamp, laser light, microwave energized V bulb, filtered light transported via light pipes from a D or H bulb, etc. The curing light may be filtered, if desired or necessary.

The compositions may also comprise at least one curable wax. A wax is solid at room temperature, specifically at 25°C. Inclusion of the wax thus may promote an increase in viscosity of the composition as it cools from the application temperature. Thus, the wax may also assist the gellant in avoiding bleeding of the composition through the substrate.

The curable wax may be any wax component that is miscible with the other components and that will polymerize with the curable monomer to form a polymer. The term wax includes, for example, any of the various natural, modified natural, and synthetic materials commonly referred to as waxes.

Suitable examples of curable waxes include those waxes that include or are functionalized with curable groups. The curable groups may include, for example, acrylate, methacrylate, alkene, allylic ether, epoxide, oxetane, and the like. These waxes can be synthesized by the reaction of a wax equipped with a transformable functional group, such as carboxylic acid or hydroxyl. The curable waxes described herein may be cured with the disclosed monomer(s).

Suitable examples of hydroxyl-terminated polyethylene waxes that may be functionalized with a curable group include, but are not limited to, mixtures of carbon chains with the structure CH₃-(CH₂)ₙ-CH₂OH, where there is a mixture of chain lengths, n, where the average chain length can be in the range of about 16 to about 50, and linear low molecular weight polyethylene, of similar average chain length. Suitable examples of such waxes include, but are not limited to, the UNILIN® series of materials such as UNILIN® 350, UNILIN® 425, UNILIN® 550 and UNILIN® 700 with Mₙ approximately equal to 375, 460, 550 and 700 g/mol, respectively. All of these waxes are commercially available from Baker-Petrolite. Guerbet alcohols, characterized as 2,2-dialkyl-1-ethanols, are also suitable compounds. Exemplary Guerbet alcohols include those containing about 16 to about 36 carbons, many of which are commercially available from Jarchem Industries Inc., Newark, NJ. PRIPOL® 2033 (C-36 dimer diol mixture including isomers of the formula 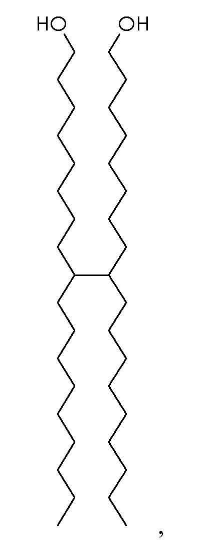 as well as other branched isomers that may include unsaturations and cyclic groups, available from Uniqema, New Castle, DE; further information on C₃₆ dimer diols of this type is disclosed in, for example, "Dimer Acids," Kirk-Othmer Encyclopedia of Chemical Technology, Vol. 8, 4th Ed. (1992), pp. 223 to 237 may also be used. These alcohols can be reacted with carboxylic acids equipped with UV curable moieties to form reactive esters. Examples of these acids include acrylic and methacrylic acids, available from Sigma-Aldrich Co. These alcohols can also undergo transesterification reactions with esters containing UV curable moieties, such as methyl 3,4-epoxycyclohexane carboxylate 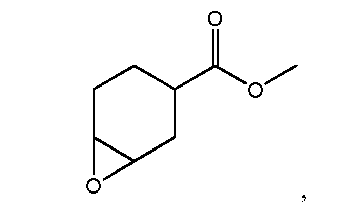 which is commercially available from Synasia.

Suitable examples of carboxylic acid-terminated polyethylene waxes that may be functionalized with a curable group include mixtures of carbon chains with the structure CH₃-(CH₂)ₙ-COOH, where there is a mixture of chain lengths, n, where the average chain length is about 16 to about 50, and linear low molecular weight polyethylene, of similar average chain length. Suitable examples of such waxes include, but are not limited to, UNICID® 350, UNICID® 425, UNICID® 550 and UNICID® 700 with Mₙ equal to approximately 390, 475, 565 and 720 g/mol, respectively. Other suitable waxes have a structure CH₃-(CH₂)ₙ-COOH, such as hexadecanoic or palmitic acid with n=14, heptadecanoic or margaric or daturic acid with n=15, octadecanoic or stearic acid with n=16, eicosanoic or arachidic acid with n=18, docosanoic or behenic acid with n=20, tetracosanoic or lignoceric acid with n=22, hexacosanoic or cerotic acid with n= 24, heptacosanoic or carboceric acid with n=25, octacosanoic or montanic acid with n=26, triacontanoic or melissic acid with n=28, dotriacontanoic or lacceroic acid with n=30, tritriacontanoic or ceromelissic or psyllic acid, with n=31, tetratriacontanoic or geddic acid with n=32, pentatriacontanoic or ceroplastic acid with n=33. Guerbet acids, characterized as 2,2-dialkyl ethanoic acids, are also suitable compounds. Exemplary Guerbet acids include those containing 16 to 36 carbons, many of which are commercially available from Jarchem Industries Inc., Newark, NJ. PRIPOL® 1009 (C-36 dimer acid mixture including isomers of the formula 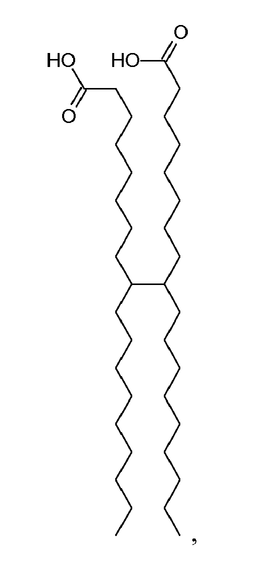 as well as other branched isomers that may include unsaturations and cyclic groups, available from Uniqema, New Castle, DE; further information on C₃₆ dimer acids of this type is disclosed in, for example, "Dimer Acids," Kirk-Othmer Encyclopedia of Chemical Technology, Vol. 8, 4th Ed. (1992), pp. 223 to 237 can also be used. These carboxylic acids can be reacted with alcohols equipped with UV curable moieties to form reactive esters. Examples of these alcohols include, but are not limited to, 2-allyloxyethanol from Sigma-Aldrich Co.; 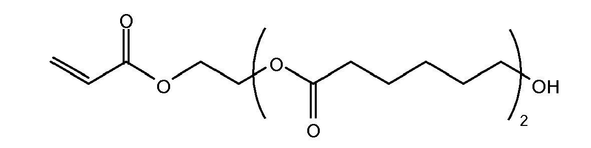 SR495B from Sartomer Company, Inc.; 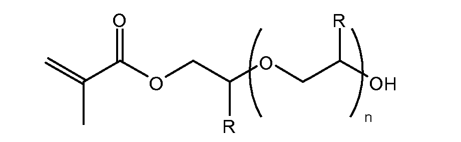 CD572 (R = H, n = 10) and SR604 (R = Me, n = 4) from Sartomer Company, Inc.; 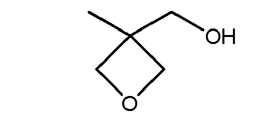 3-methyl-3-oxetane methanol from Sigma-Aldrich Co.; and 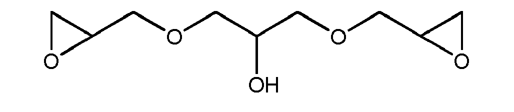 glycerol diglycidyl ether from Sigma-Aldrch Co.

The curable wax can be included in the composition in an amount of from, for example, about 0.1% to about 30% by weight of the composition, such as from about 0.5% to about 20% or from about 0.5% to 15% by weight of the composition.

The colored and colorless compositions may also optionally comprise an antioxidant stabilizer. The optional antioxidants of the compositions protect the images from oxidation and also protect the composition components from oxidation during the heating portion of an ink preparation process. Specific examples of suitable antioxidant stabilizers include NAUGARD™ 524, NAUGARD™ 635, NAUGARD™ A, NAUGARD™ I-403, and NAUGARD™ 959, commercially available from Crompton Corporation, Middlebury, Conn.; IRGANOX™ 1010, and IRGASTAB UV 10, commercially available from Ciba Specialty Chemicals; GENORAD 16 and GENORAD 40 commercially available from Rahn AG, Zurich, Switzerland, and the like.

The colored and colorless compositions may further optionally comprise conventional additives to take advantage of the known functionality associated with such conventional additives. Such additives may include, for example, defoamers, surfactants, slip and leveling agents, etc.

The colored and colorless compositions desirably do not yellow upon curing, with little to no measurable difference in any of L* a* b* values or k, c, m, y being observed. Being "substantially non-yellowing" refers to a composition changing color or hue upon curing in an amount of less than about 15%, such as less than about 10% or less than about 5%, for example about 0%.

Colored compositions, such as phase change ink compositions, comprise at least one colorant. Any desired or effective colorant can be employed in the phase change ink compositions, including dyes, pigments, mixtures thereof, and the like, provided that the colorant can be dissolved or dispersed in the ink carrier. Any dye or pigment may be chosen, provided that it is capable of being dispersed or dissolved in the ink carrier and is compatible with the other ink components. The phase change carrier compositions can be used in combination with conventional phase change ink colorant materials, such as Color Index (C.I.) Solvent Dyes, Disperse Dyes, modified Acid and Direct Dyes, Basic Dyes, Sulphur Dyes, Vat Dyes, and the like. Examples of suitable dyes include Neozapon Red 492 (BASF); Orasol Red G (Ciba); Direct Brilliant Pink B (Oriental Giant Dyes); Direct Red 3BL (Classic Dyestuffs); Supranol Brilliant Red 3BW (Bayer AG); Lemon Yellow 6G (United Chemie); Light Fast Yellow 3G (Shaanxi); Aizen Spilon Yellow C-GNH (Hodogaya Chemical); Bernachrome Yellow GD Sub (Classic Dyestuffs); Cartasol Brilliant Yellow 4GF (Clariant); Cibanon Yellow 2GN (Ciba); Orasol Black CN (Ciba); Savinyl Black RLSN (Clariant); Pyrazol Black BG (Clariant); Morfast Black 101 (Rohm & Haas); Diaazol Black RN (ICI); Orasol Blue GN (Ciba); Savinyl Blue GLS (Clariant); Luxol Fast Blue MBSN (Pylam Products); Sevron Blue 5GMF (Classic Dyestuffs); Basacid Blue 750 (BASF), Neozapon Black X51 (BASF)"Classic Solvent Black 7 (Classic Dyestuffs), Sudan Blue 670 (C.I. 61554) (BASF), Sudan Yellow 146 (C.I. 12700) (BASF), Sudan Red 462 (C.I. 26050) (BASF), C.I. Disperse Yellow 238, Neptune Red Base NB543 (BASF, C.I. Solvent Red 49), Neopen Blue FF-4012 from BASF, Lampronol Black BR from ICI (C.I. Solvent Black 35), Morton Morplas Magenta 36 (C.I. Solvent Red 172), metal phthalocyanine colorants such as those disclosed in U.S. Patent No. 6,221,137 and the like. Polymeric dyes can also be used, such as those disclosed in, for example, U.S. Patent No. 5,621,022 and U.S. Patent No. 5,231,135 and commercially available from, for example, Milliken & Company as Milliken Ink Yellow 869, Milliken Ink Blue 92, Milliken Ink Red 357, Milliken Ink Yellow 1800, Milliken Ink Black 8915-67, uncut Reactant Orange X-38, uncut Reactant Blue X-17, Solvent Yellow 162, Acid Red 52, Solvent Blue 44, and uncut Reactant Violet X-80.

Pigments are also suitable colorants for the phase change inks. Examples of suitable pigments include PALIOGEN Violet 5100 (commercially available from BASF); PALIOGEN Violet 5890 (commercially available from BASF); HELIOGEN Green L8730 (commercially available from BASF); LITHOL Scarlet D3700 (commercially available from BASF); SUNFAST Blue 15:4 (commercially available from Sun Chemical); Hostaperm Blue B2G-D (commercially available from Clariant); Hostaperm Blue B4G (commercially available from Clariant); Permanent Red P-F7RK; Hostaperm Violet BL (commercially available from Clariant); LITHOL Scarlet 4440 (commercially available from BASF); Bon Red C (commercially available from Dominion Color Company); ORACET Pink RF (commercially available from Ciba); PALIOGEN Red 3871 K (commercially available from BASF); SUNFAST Blue 15:3 (commercially available from Sun Chemical); PALIOGEN Red 3340 (commercially available from BASF); SUNFAST Carbazole Violet 23 (commercially available from Sun Chemical); LITHOL Fast Scarlet L4300 (commercially available from BASF); SUNBRITE Yellow 17 (commercially available from Sun Chemical); HELIOGEN Blue L6900, L7020 (commercially available from BASF); SUNBRITE Yellow 74 (commercially available from Sun Chemical); SPECTRA PAC C Orange 16 (commercially available from Sun Chemical); HELIOGEN Blue K6902, K6910 (commercially available from BASF); SUNFAST Magenta 122 (commercially available from Sun Chemical); HELIOGEN Blue D6840, D7080 (commercially available from BASF); Sudan Blue OS (commercially available from BASF); NEOPEN Blue FF4012 (commercially available from BASF); PV Fast Blue B2GO1 (commercially available from Clariant); IRGALITE Blue BCA (commercially available from Ciba); PALIOGEN Blue 6470 (commercially available from BASF); Sudan Orange G (commercially available from Aldrich), Sudan Orange 220 (commercially available from BASF); PALIOGEN Orange 3040 (BASF); PALIOGEN Yellow 152, 1560 (commercially available from BASF); LITHOL Fast Yellow 0991 K (commercially available from BASF); PALIOTOL Yellow 1840 (commercially available from BASF); NOVOPERM Yellow FGL (commercially available from Clariant); Ink Jet Yellow 4G VP2532 (commercially available from Clariant); Toner Yellow HG (commercially available from Clariant); Lumogen Yellow D0790 (commercially available from BASF); Suco-Yellow L1250 (commercially available from BASF); Suco-Yellow D1355 (commercially available from BASF); Suco Fast Yellow Dl 355, Dl 351 (commercially available from BASF); HOSTAPERM Pink E 02 (commercially available from Clariant); Hansa Brilliant Yellow 5GX03 (commercially available from Clariant); Permanent Yellow GRL 02 (commercially available from Clariant); Permanent Rubine L6B 05 (commercially available from Clariant); FANAL Pink D4830 (commercially available from BASF); CINQUASIA Magenta (commercially available from DU PONT); PALIOGEN Black L0084 (commercially available from BASF); Pigment Black K801 (commercially available from BASF); and carbon blacks such as REGAL 330™ (commercially available from Cabot), Nipex 150 (commercially available from Evonik) Carbon Black 5250 and Carbon Black 5750 (commercially available from Columbia Chemical), and the like, as well as mixtures thereof.

Also suitable are the colorants disclosed in U.S. Patent No. 6,472,523, U.S. Patent No. 6,726,755, U.S. Patent No. 6,476,219, U.S. Patent No. 6,576,747, U.S. Patent No. 6,713,614, U.S. Patent No. 6,663,703, U.S. Patent No. 6,755,902, U.S. Patent No. 6,590,082, U.S. Patent No. 6,696,552, U.S. Patent No. 6,576,748, U.S. Patent No. 6,646,111, U.S. Patent No. 6,673,139, U.S. Patent No. 6,958,406, U.S. Patent No. 6,821,327, U.S. Patent No. 7,053,227, U.S. Patent No. 7,381,831 and U.S. Patent No. 7,427,323.

In embodiments, the compositions described herein may be prepared by mixing the composition components at a temperature of from about 75°C to about 120°C, such as from about 80°C to about 110°C or from about 75°C to about 100°C, until homogenous, for example for from about 0.1 hour to about 3 hours, such as about 2 hours. Once the mixture is homogenous, then any photoinitiator may be added. Alternatively, all of the components of the composition may be combined immediately and mixed together.

In ink compositions, the amide gellant and cationically curable monomer (and the radically curable monomer in hybrid ink compositions), assist in evoking a rapid, thermally driven phase change that pins an ink composition to a substrate before curing, effectively limiting the amount of showthrough observed on the substrate (e.g., plain paper). These components also impart a large substrate latitude to ink compositions, including coated papers, foils, and plastics. In the absence of a colorant, these same phase change systems can be used to prevent a digitally applied overcoat from soaking into areas of a substrate uncovered by a printed image.

Cationic curing offers advantages over radical curing, at least radical curing alone, including providing to a colored or colorless composition any of increased thermal stability, insensitivity to oxygen, low shrinkage and opportunities for dark cure and/or shadow cure. Dark cure refers to the phenomenon in which polymerization continues after radiation is discontinued. It is enabled by the fact that cationic curing is initiated by photoacids and, therefore, does not undergo termination reactions, as radicals do. Shadow cure refers to the phenomenon in which active curing centers migrate after radiation is discontinued and, in the process, continue the polymerization process in areas that had not been exposed to radiation. Both dark and shadow curing offer the potential for an increased degree of polymerization over systems which do not offer dark and/or shadow curing. Specifically, both dark and shadow curing offer the potential for an increased degree of polymerization in pigmented systems in which photons are reflected, scattered and/or absorbed by particles, preventing them from penetrating through the entire composition. Hybrid curable inks offer the speed of radical curing combined with the dark and/or shadow curing properties of cationic polymerization pathways.

This disclosure will be illustrated further in the following Example.

### EXAMPLE 1

Three ultraviolet (UV) curable colorless compositions--Formulation 1 (cationic), Formulation 2 (cationic), and Formulation 3 (hybrid)--were all prepared by mixing each of the components indicated in Table 1 at 90°C.

**TABLE 1**

| Component | Structure | Function | Formulations, wt% | | |
|---|---|---|---|---|---|
| | | | 1 | 2 | 3 |
| Amide gellant | 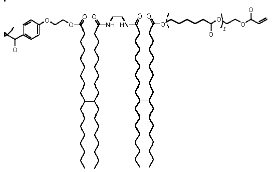 | Phase change agent | 10 | 10 | 10 |
| 3,4-epoxycyclohexylmethyl-3,4-epoxycycloxane carboxylate | 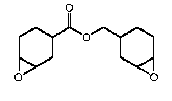 | Monomer | 80 | | |
| 4-(vinyloxy)butyl] adipate | 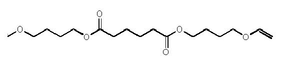 | Monomer | | 80 | 2.5 |
| SR9003 | 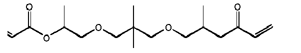 | Monomer | | | 2.5 |
| R-gen® BF-1172 | 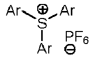 | Photoinitiator | 10 | 10 | 2.5 |
| Irgacure 127 | 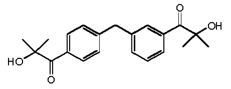 | Photoinitiator | | | 2.5 |

Formulations 1, 2 and 3 were all gels at room temperature, showing that the amide gellant can form gels with the above monomers. Small amounts of Formulations 1, 2 and 3 were applied with a spatula to glass slides; all were observed to cure (form polymers) when exposed to ultraviolet light from a UV Fusion Lighthammer 6 device at 32 fpm (feet per minute). Formulations 1, 2 and 3 would be suitable as ink carriers for a colorant to form phase change ink compositions, and would all be suitable as overcoat compositions with or without the addition of further components.

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art, and are also intended to be encompassed by the following claims.

## Claims

1. A radiation curable phase change composition, comprising:
a gellant;
a cationically curable monomer;
a cationic photoinitiator; and, optionally,
a radically curable monomer; and
a free-radical photoinitiator.

2. The composition according to claim 1, further comprising:
a colorant.

3. The composition according to claim 1, wherein the composition is substantially free of colorant.

4. The composition according to claim 1, further comprising:
a curable wax that includes or is functionalized with a curable group.

5. The composition according to claim 1, further comprising:
an antioxidant stabilizer.

6. The composition according to claim 1, wherein the gellant is of the formula 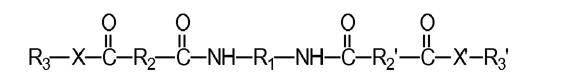 wherein:
R₁ is:
(i) an alkylene group with from 1 to 20 carbon atoms in the alkylene chain,
(ii) an arylene group with from 5 to 20 carbon atoms in the arylene chain,
(iii) an arylalkylene group with from 6 to 32 carbon atoms in the arylalkylene chain, or
(iv) an alkylarylene group with from 6 to 32 carbon atoms in the alkylarylene chain,
wherein the substituents on the substituted alkylene, arylene, arylalkylene, and alkylarylene groups are one or more substituents selected from the group consisting of halogen atoms, cyano groups, pyridine groups, pyridinium groups, ether groups, aldehyde groups, ketone groups, ester groups, amide groups, carbonyl groups, thiocarbonyl groups, sulfide groups, nitro groups, nitroso groups, acyl groups, azo groups, urethane groups, urea groups, mixtures thereof, and two or more substituents joined together to form a ring;
R₂ and R₂' each, independently of the other, are:
(i) alkylene groups with from 1 to 54 carbon atoms in the alkylene chain,
(ii) arylene groups with from 5 to 14 carbon atoms in the arylene chain,
(iii) arylalkylene groups with from 6 to 32 carbon atoms in the arylalkylene chain, or
(iv) alkylarylene groups with from 6 to 32 carbon atoms in the alkylarylene chain,
wherein the substituents on the substituted alkylene, arylene, arylalkylene, and alkylarylene groups are one or more substituents selected from the group consisting of halogen atoms, cyano groups, ether groups, aldehyde groups, ketone groups, ester groups, amide groups, carbonyl groups, thiocarbonyl groups, phosphine groups, phosphonium groups, phosphate groups, nitrile groups, mercapto groups, nitro groups, nitroso groups, acyl groups, acid anhydride groups, azide groups, azo groups, cyanato groups, urethane groups, urea groups, mixtures thereof, and two or more substituents joined together to form a ring;
R₃ and R₃' each, independently of the other, are either:
(a) photoinitiating groups derived from 1-(4-(2-hydroxyethoxy)phenyl)-2-hydroxy-2-methylpropan-1-one, of the formula 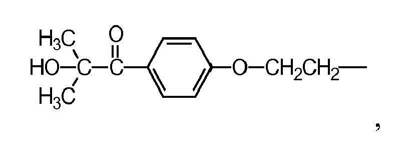 groups derived from 1-hydroxycyclohexylphenylketone, of the formula 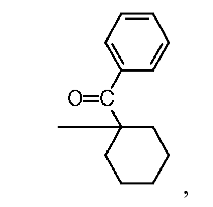 groups derived from 2-hydroxy-2-methyl-1-phenylpropan-1-one, of the formula 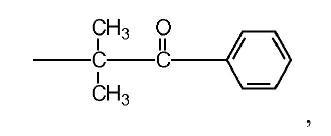 groups derived from *N,N*-dimethylethanolamine or *N,N*-dimethylethylenediamine, of the formula 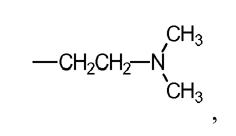 or:
(b) a group which is:
(i) an alkyl group with from 2 to 100 carbon atoms in the alkyl chain,
(ii) an aryl group with from 5 to 100 carbon atoms on the aryl chain,
(iii) an arylalkyl group with from 6 to 100 carbon atoms on the arylalkyl chain, or
(iv) an alkylaryl group with from 6 to 100 carbon atoms in the alkylaryl chain,
wherein the substituents on the substituted alkyl, arylalkyl, and alkylaryl groups are one or more substituents selected from the group consisting of halogen atoms, ether groups, aldehyde groups, ketone groups, ester groups, amide groups, carbonyl groups, thiocarbonyl groups, sulfide groups, phosphine groups, phosphonium groups, phosphate groups, nitrile groups, mercapto groups, nitro groups, nitroso groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and two or more substituents joined together to form a ring;
and X and X' each, independently of the other, is an oxygen atom or a group of the formula -NR₄-, wherein R₄ is:
(i) a hydrogen atom;
(ii) an alkyl group with from 1 to 100 carbon atoms in the alkyl chain,
(iii) an aryl group with from 5 to 100 carbon atoms in the aryl chain,
(iv) an arylalkyl group with from 6 to 100 carbon atoms in the arylalkyl group, or
(v) an alkylaryl group with from 6 to 100 carbon atoms in the alkylaryl chain,
wherein the substituents on the substituted alkyl, aryl, arylalkyl, and alkylaryl groups is one or more substituents selected from the group consisting of halogen atoms, ether groups, aldehyde groups, ketone groups, ester groups, amide groups, carbonyl groups, thiocarbonyl groups, sulfate groups, sulfonate groups, sulfonic acid groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and two or more substituents joined together to form a ring.

7. The composition according to claim 1, wherein the gellant is

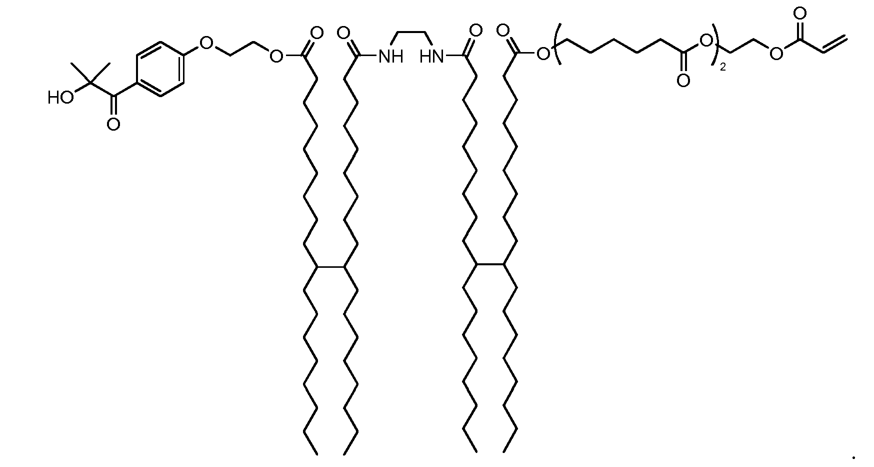

8. The composition according to claim 1, wherein the cationically curable monomer is selected from the group consisting of epoxides, vinyl ethers and oxetanes.

9. The composition according to claim 1, wherein the cationically curable monomer is selected from the group consisting of:
3,4-epoxycyclohexylmethyl-3,4-epoxycycloxane carboxylate; hexanedioic acid, bis[4-(vinyloxy)butyl] ester; bis[4-(ethenyloxy)butyl] adipate; 1,3-benzenedicarboxylic acid, bis[4-(ethenyloxy)butyl] ester; 4-(vinyloxy)butyl stearate; 4-(vinyloxy)butyl benzoate; 4-(vinyloxymethyl)cyclohexylmethyl benzoate; vinyl octadecyl ether; vinyl iso-octyl ether;
1,2,4-benzenetricarboxylic acid, tris[4-(ethenyloxy)butyl]ester; 1,4-butanediol diglycidyl ether; and 1,2-epoxyhexadecane.

10. The composition according to claim 1, wherein the cationically curable monomer is at least one of 3,4-epoxycyclohexylmethyl-3,4-epoxycycloxane carboxylate and bis[4-(vinyloxy)butyl]adipate.

11. The composition according to claim 1, wherein the cationically curable monomer is from 65% to 96% by weight of the composition; preferably from 20% to 48% by weight of the composition.

12. The composition according to claim 1, wherein the cationic photoinitiator is selected from the group consisting of:
- triarylsulphonium salts, diaryliodonium salts, aryldiazonium salts, triarylselenonium salts, dialkylphenacylsulphonium salts, triarylsulphoxonium salts, aryloxydiarylsulphonoxonium salts, and dialkylphenacylsulphoxonium salts, and wherein the salts are formed with ions selected from the group consisting of BF₄⁻, PF₆⁻, AsF₆⁻, SbF₆⁻ and CF₃SO₃⁻.; or
- bis[4-(diphenylsulphonio)-phenyl] sulphide bis-hexafluorophosphate; bis[4-di(4-(2-hydroxyethyl)phenyl)sulphonio-phenyl] sulphide bis-hexafluorophosphate; bis[4-di(4-(2-hydroxyethyl)phenyl)sulphonio-phenyl] sulphide bis-hexafluoroantimonate; 4-methylphenyl-(4-(2-methylpropyl) phenyl)iodonium hexafluorophosphate, and R-gen® BF-1172.

13. The composition according to claim 1, wherein the cationic photoinitiator is from about 0.5% to about 10% by weight of the composition.

14. The composition according to claim 1, wherein the radically curable monomer is selected from the group consisting of propoxylated neopentyl glycol diacrylate, diethylene glycol diacrylate, triethylene glycol diacrylate, hexanediol diacrylate, dipropyleneglycol diacrylate, tripropylene glycol diacrylate, alkoxylated neopentyl glycol diacrylate, isodecyl acrylate, tridecyl acrylate, isobornyl acrylate, propoxylated trimethylolpropane triacrylate, ethoxylated trimethylolpropane triacrylate, di-trimethylolpropane tetraacrylate, dipentaerythritol pentaacrylate, ethoxylated pentaerythritol tetraacrylate, propoxylated glycerol triacrylate, isobornyl methacrylate, lauryl acrylate, lauryl methacrylate, neopentyl glycol propoxylate methylether monoacrylate, isodecylmethacrylate, caprolactone acrylate, 2-phenoxyethyl acrylate, isooctylacrylate, isooctylmethacrylate, and butyl acrylate.

15. The composition according to claim 1, wherein the free-radical photoinitiator is selected from the group consisting of:
2,4,6-trimethylbenzoyldiphenylphosphine oxide;
2,4,6-trimethylbenzoylethoxyphenylphosphine oxide;
bis(2,4,6-trimethylbenzoyl)-phenyl-phosphine oxide;
2-methyl-1-(4-methylthio)phenyl-2-(4-morphorlinyl)-1-propanone;
1-(4-(2-hydroxyethoxy)phenyl)-2-hydroxy-2-methylpropan-1-one;
2-hydroxy-1-(4-(4-(2-hydroxy-2-methylpropionyl)-benzyl)-phenyl)-2-methylpropan-1-one; titanocenes;
isopropylthioxanthone (ITX);
1-hydroxy-cyclohexylphenylketone;
benzophenone;
2,4,6-trimethylbenzophenone;
4-methylbenzophenone;
diphenyl-(2,4,6-trimethylbenzoyl) phosphine oxide; 2,4,6-trimethylbenzoylphenylphosphinic acid ethyl ester; oligo(2-hydroxy-2-methyl-1-(4-(1-methylvinyl)phenyl) propanone); 2-hydroxy-2-methyl-1-phenyl-1-propanone; and benzyl-dimethylketal.
